# FASCICULE DE BREVET EUROPEEN

(11) **EP 2 021 865 B1**
(45) Date de publication et mention de la délivrance du brevet: **27.06.2012**
(21) Numéro de dépôt: 07766032.2
(22) Date de dépôt: 11.05.2007
(51) Int. Cl.: G02C 7/08, G02C 7/10

(54) **REALISATION D'UN ELEMENT OPTIQUE TRANSPARENT COMPRENANT UNE SUBSTANCE CONTENUE DANS DES CELLULES**
HERSTELLUNG EINES TRANSPARENTEN OPTISCHEN ELEMENTS MIT EINER IN ZELLEN ENTHALTENEN SUBSTANZ
PRODUCING A TRANSPARENT OPTICAL ELEMENT COMPRISING A SUBSTANCE CONTAINED IN CELLS

(30) Priorité: 17.05.2006 FR 0604421
(43) Date de publication de la demande: 11.02.2009
(73) Titulaire: ESSILOR INTERNATIONAL (Compagnie Générale d'Optique), 94220 Charenton le Pont (FR)
(72) Inventeur: ARCHAMBEAU, Samuel, 94220 Charenton le Pont (FR); BALLET, Jérôme, 94220 Charenton le Pont (FR); CANO, Jean, Paul, 94220 Charenton le Pont (FR); LEFILLASTRE, Paul, 94220 Charenton le Pont (FR); PONT, Laëtitia, 94220 Charenton le Pont (FR); SAUGEY, Anthony, 94220 Charenton le Pont (FR); SHI, Feng, 94220 Charenton le Pont (FR)
(74) Mandataire: Cabinet Plasseraud
(86) Numéro de dépôt international: PCT/FR2007/051254
(87) Numéro de publication internationale: WO 2007/132116

(56) Documents cités:
- WO-A-03/012542
- JP-A- 2 223 936
- US-A1- 2006 006 336

## Description

La présente invention concerne un procédé de réalisation d'un élément optique transparent qui comprend une substance contenue dans des cellules. Elle concerne aussi un élément optique qui est ainsi obtenu.

Il est connu de conférer une propriété optique à un élément en réalisant un ensemble de cellules à la surface d'un composant de cet élément, et en introduisant une substance optique appropriée dans les cellules, sous forme d'un liquide. La substance confère alors la propriété optique désirée à l'élément. L'élément peut être une lentille optique, notamment une lentille ophtalmique. A titre d'exemple, la substance peut présenter un indice de réfraction variable, par exemple pour ajuster une puissance optique et/ou un astigmatisme d'une lentille. Ce peut être aussi un colorant, une substance photochromique, une substance électrochromique, etc.

Une difficulté particulière apparaît lorsque l'élément optique est transparent. En effet, pour un élément optique transparent, d'éventuels défauts affectent sensiblement la qualité optique de l'élément, même lorsque ces défauts sont de taille micronique. Certains défauts peuvent notamment engendrer des phénomènes lumineux tels que la diffraction, et apparaître sous forme d'irisations, de variations de la transmission lumineuse à travers l'élément optique, de scintillements, etc...

Au sens de l'invention, on entend qu'un élément optique est transparent lorsqu'un objet qui est observé à travers cet élément est perçu sans perte significative de contraste. Autrement dit, une image peut être formée à travers l'élément optique avec une qualité suffisante, en termes de contraste et de netteté notamment. Ainsi, la diffraction et la diffusion, qui correspondent à l'éparpillement de la lumière lorsque celle-ci est limitée matériellement à un endroit déterminé de son parcours ("Optique - Fondement et applications" - J.P. Pérez - Dunod - 7ème édition - Paris 2004 - Page 262), sont considérées comme des manques de transparence.

Pour un élément optique transparent qui comporte une substance contenue dans des cellules, il est donc indispensable que toutes les cellules soient remplies avec la substance d'une même façon pour éviter la formation de défauts optiques qui peuvent altérer la transparence de l'élément, mais également son niveau de qualité dioptrique et cosmétique. En particulier, l'absence de bulles dans certaines cellules, l'absence de variations de niveau de remplissage entre des cellules différentes, et l'absence d'endommagement des parois de certaines cellules sont indispensables.

Un but de la présente invention est de réaliser un élément optique transparent qui est pourvu de cellules pour contenir une substance optique, et qui possède une qualité optique suffisante, compatible avec la transparence de l'élément.

Un autre but de l'invention est de réaliser un élément optique transparent qui est pourvu de cellules sur une face éventuellement courbe.

Pour cela, l'invention propose un procédé de réalisation d'un élément optique transparent, qui comprend les étapes suivantes :
/a/ produire un composant optique ayant au moins un ensemble de cellules vides qui sont juxtaposées parallèlement à une surface du composant, les cellules étant ouvertes au niveau de la surface du composant et séparées par des parois ;
/b/ déposer une quantité de substance liquide à propriété optique sur une partie de l'ensemble de cellules, cette quantité correspondant à un volume supérieur à la contenance totale des cellules ; et
/c/ pousser une partie de la substance qui est située à l'extérieur des cellules par dessus les parois et les cellules, de façon à ce que de la substance pénètre dans des cellules pas encore remplies et de façon à chasser un excès de substance, en balayant tout l'ensemble de cellules.

Ainsi, selon l'invention, la substance liquide à propriété optique est poussée sur toute la surface du composant optique pourvue de cellules, de sorte qu'elle pénètre dans les cellules selon un front de remplissage qui est déplacé progressivement. De cette façon, l'air initialement présent dans les cellules peut sortir librement en avant du front de remplissage. Aucune bulle n'est donc formée dans les cellules.

En outre, étant donné qu'une pression exercée sur le composant optique n'est nécessaire que pour pousser la partie de la substance qui est à l'extérieur des cellules, une telle pression peut être limitée. En effet, le déplacement de la substance sur l'ensemble de cellules peut être obtenu en appliquant une force qui est orientée essentiellement parallèlement à la surface du composant optique. Le risque de déformer le composant optique, ainsi que celui d'endommager certaines des parois des cellules, est alors réduit.

Enfin, étant donné qu'une quantité de substance est amenée au dessus de chaque cellule lors de son remplissage, qui est supérieure à la contenance de cette cellule, toutes les cellules sont remplies d'une même façon par rapport à leur ouverture supérieure, quelque soit la profondeur ou la taille de chaque cellule.

Lorsque l'ensemble des cellules a été entièrement balayé en poussant la partie de substance présente au dessus des cellules, une partie de la substance qui reste encore en dehors des cellules constitue un excédent de substance inutilisé. Cet excédent peut être récupéré afin d'être utilisé pour réaliser un autre élément optique, ou peut être minimisé en ajustant la quantité de substance initialement déposée sur l'ensemble de cellules.

Selon une caractéristique supplémentaire de l'invention, la partie de substance qui est située à l'extérieur des cellules est poussée radialement depuis une zone centrale de l'ensemble de cellules en direction d'un bord périphérique de cet ensemble, selon un front de déplacement sensiblement circulaire.

Selon un mode de mise en oeuvre particulier de l'invention, une membrane déformable peut être utilisée pour pousser la substance sur l'ensemble de cellules. Par exemple, la membrane peut être retenue par un bord périphérique de celle-ci, et être amenée au dessus de l'ensemble de cellules. Elle est alors déformée pour venir en application contre le composant optique. Elle peut être déformée par aspiration, notamment, en créant une dépression entre le composant et la membrane.

Avantageusement, la substance à propriété optique est adaptée de sorte qu'un angle de contact de cette substance avec le composant optique est inférieur à 90°, à l'endroit des cellules. Pour cela, un tensioactif peut éventuellement être ajouté à la substance à propriété optique, pour ajuster une tension superficielle de celle-ci. De cette façon, la substance à propriété optique qui est contenue dans chaque cellule peut présenter une surface sensiblement plane dans l'ouverture de la cellule, sans former de ménisque convexe ou concave. Aucune réduction de la transparence de l'élément optique, par exemple du fait d'une diffusion lumineuse, ne résulte donc de la forme de la surface de la substance dans l'ouverture de chaque cellule. Par ailleurs, le remplissage des cellules peut être effectué dans ces conditions exactement jusqu'au sommet des parois, d'une façon contrôlée et reproductible.

Selon un perfectionnement de l'invention, le procédé peut comprendre en outre une fermeture des cellules remplies de substance au moyen d'un film sensiblement transparent qui est appliqué sur l'ensemble de cellules, et qui peut être fixé aux parois des cellules. Avantageusement, le film est fixé à ces parois d'une façon permanente, de sorte que la substance optique ne peut plus sortir des cellules, pendant la suite de la fabrication de l'élément optique ni pendant l'utilisation de celui-ci.

De préférence, la fermeture des cellules remplies est effectuée en appliquant progressivement le film sur l'ensemble de cellules pendant l'étape /c/. Le film pousse alors la partie de la substance qui est à l'extérieur des cellules pendant son application. Le remplissage des cellules avec la substance et la fermeture des cellules sont alors combinées en une étape unique. La durée de fabrication de l'élément optique est alors réduite et, par conséquent, le prix de revient de chaque unité d'élément optique qui est fabriquée est diminué.

Un élément peut être une lentille optique et, en particulier, une lentille ophtalmique élément produit par le procédé selon l'invention peut être une

D'autres particularités et avantages de la présente invention apparaîtront dans la description ci-après d'exemples de mise en oeuvre non limitatifs, en référence aux dessins annexés, dans lesquels :
- les figures 1a et 1 b illustrent deux composants optiques auxquels l'invention peut être appliquée ;
- la figure 2 est une vue agrandie des cellules ;
- la figure 3 illustre une convention de mesure d'un angle de contact ; et
- les figures 4a et 4b illustrent un mode particulier de remplissage des cellules, conforme à l'invention.

Pour raison de clarté, les dimensions des éléments représentés ne sont pas en proportion avec des dimensions ou des rapports de dimensions réels. En outre, des références identiques sur des figures différentes désignent des éléments identiques.

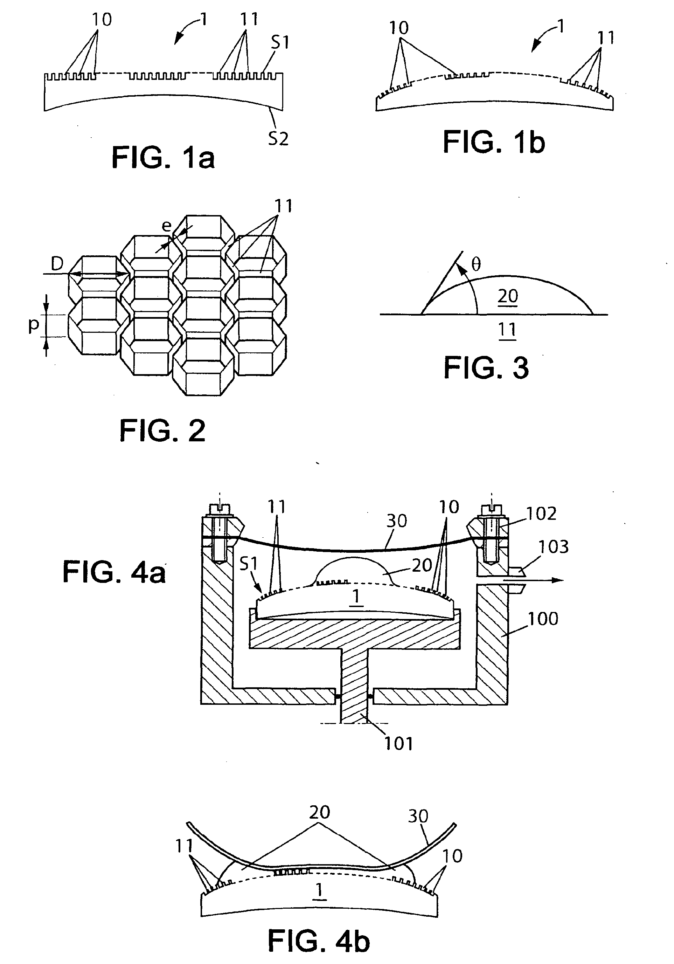

Les composants optiques 1 qui sont représentés sur les figures 1a et 1 b sont des ébauches de lentilles ophtalmiques, ou verres de lunettes. De telles lentilles peuvent être en matériau minéral ou organique. Il est entendu que les modes de mise en oeuvre de l'invention qui sont décrits dans la suite peuvent être adaptés d'une façon connue en soi en fonction du matériau de la lentille.

Chaque lentille 1 possède deux faces S1 et S2, dont les formes définissent la puissance optique et l'astigmatisme de la lentille. Eventuellement, l'une des deux faces peut être plane (figure 1a), ou les deux faces peuvent être courbes (figure 1 b). Pour mettre en oeuvre l'invention, l'une des deux faces de la lentille 1, par exemple la face S1, est pourvue d'un ensemble de cellules juxtaposées 10, qui forment des cavités destinées à être remplies par une substance liquide. Pour le composant 1 de la figure 1a, la face S1 pourvue des cellules 10 est plane. Elle est courbe pour le composant 1 de la figure 1 b.

Conformément à la figure 2, deux cellules 10 voisines sont séparées par une paroi 11. L'ensemble de cellules 10 peut être formé directement dans le composant 1 ou, alternativement, il peut être formé dans un film qui est rapporté, par exemple par collage, sur le composant 1. Les cellules 10 peuvent être disposées de façon régulière ou irrégulière les unes à côté des autres. En particulier, elles peuvent former un réseau hexagonal. A titre d'exemple, chaque cellule 10 peut avoir une dimension transversale D d'environ 200 µm (micromètre), parallèlement à la surface du composant 1, et une profondeur p d'environ 5 µm, perpendiculairement à la surface du composant. Les parois 11 peuvent avoir une épaisseur e d'environ 2 µm, parallèlement à la surface du composant 1.

La substance liquide qui est destinée à être introduite dans les cellules 10 peut présenter un indice de réfraction particulier, ou un indice de réfraction qui peut être modulé ultérieurement, notamment par irradiation. Ce peut être aussi une substance colorante ou absorbante, une substance photochromique, une substance électrochromique, une substance à base de cristaux liquides, etc. Elle possède de préférence une faible viscosité et une capacité suffisante de mouillage sur le matériau des parois 11. La viscosité et la tension de surface de la substance à propriété optique peuvent être ajustées, d'une façon connue de l'Homme du métier, en y ajoutant au moins un agent fluidifiant et un tensioactif. Par exemple, la viscosité de la substance peut ainsi être ajustée à une valeur inférieure à 10000 centipoises, et l'angle de contact de la substance avec la surface des parois 11 peut être ajusté à une valeur inférieure à 90°. La figure 3 illustre la convention qui est utilisée pour mesurer l'angle de contact θ d'une goutte de la substance sur une surface plane du matériau des parois 11.

Eventuellement, la substance à propriété optique peut incorporer des particules solides, de dimensions suffisamment faibles pour ne pas gêner le remplissage des cellules. Ce peut aussi être un gel, si la viscosité de celui-ci permet de remplir les cellules. Un tel gel est alors assimilé à un liquide dans le cadre de l'invention.

Une quantité déterminée de la substance 20 est déposée sur la surface S1 du composant optique 1. De préférence, le composant 1 est maintenu dans une position sensiblement horizontale, avec la face S1 tournée vers le haut. La quantité de substance est avantageusement déterminée pour permettre un remplissage de toutes les cellules 10 en une seule étape. De cette façon, aucune marque n'apparaît entre des zones de l'ensemble de cellules 10 qui correspondent à des étapes de remplissage distinctes. Par exemple, la quantité de substance 20 qui est déposée sur le composant 1 correspond à un volume compris entre 101% et 200% de la contenance totale des cellules 10.

La substance 20 est déposée sur l'ensemble de cellules 10 dans une zone centrale du composant 1. Lorsque la quantité de substance 20 repose sur l'ensemble de cellules 10, une partie inférieure de cette quantité de substance 20 pénètre dans les cellules 10 qui sont recouvertes, et une partie supérieure de la quantité de substance 20 reste à l'extérieur des cellules 10, au dessus de celles-ci. Cette partie supérieure est alors poussée sur l'ensemble de cellules 10, en utilisant un outil approprié, de sorte que la substance pénètre de proche en proche dans des cellules 10 nouvellement recouvertes. La partie supérieure de la quantité de substance 20 qui est située à l'extérieur des cellules 10 est poussée selon un mouvement radial sur la surface S1. De cette façon, chaque zone de la surface S1 est balayée une seule fois. Aucune cellule n'est ainsi remplie de substance plus qu'une autre, et aucune couche de substance n'est présente en surépaisseur au dessus des parois, à la différence de ce que provoquerait un mouvement de répartition de la substance qui serait effectué en plusieurs reprises.

Une pression adaptée est appliquée à l'outil, pour pousser la partie de substance 20 qui n'a pas encore pénétré dans des cellules sans laisser de couche de substance au dessus des parois 11 dans une zone où les cellules 10 sont remplies. De cette façon, les sommets des parois 11 restent découverts, et un film de fermeture des parois pourra être fixé éventuellement sur ceux-ci. La pression qui est appliquée à l'outil est aussi adaptée pour de pas déformer ni effriter les sommets des parois 11. A titre d'exemple, la pression exercée par l'outil sur les sommets des parois 11 est comprise entre la pression atmosphérique mini et 10 bars, et préférentiellement comprise entre la pression atmosphérique et 5 bars.

Lorsque toute la surface S1 a été ainsi parcourue, et que toutes les cellules 10 ont été remplies de substance liquide, l'excédent de substance 20 est alors chassé radialement vers le bord périphérique du composant 1, puis éliminé. De préférence, le remplissage des cellules 10 et l'élimination de l'excédent de substance 20 sont effectués au cours d'une même progression de l'outil sur la surface S1. Eventuellement, lors de ce mouvement, le composant 1 peut être incliné et/ou mis en rotation pour faciliter la pénétration de la substance 20 dans les cellules 10, ou pour faciliter l'entraînement de la substance par l'outil.

Selon un mode opératoire particulier illustré par les figures 4a et 4b, le composant 1 est placé dans une enceinte à pression contrôlée 100, avec la face S1 tournée vers le haut. Il est disposé sur un support 101 qui peut être monté à l'intérieur de l'enceinte 100, puis maintenu à une hauteur fixée. L'enceinte 100 est fermée hermétiquement sur sa face supérieure par une membrane déformable 30. La membrane 30 est maintenue fermement par un bord périphérique de celle-ci sur une paroi latérale de l'enceinte 100, par exemple au moyen d'un anneau de serrage vissé 102. Avant de fermer l'enceinte 100, une quantité appropriée de substance 20 est déposée sur l'ensemble de cellules 10, à peu près dans la zone centrale de la surface S1 (figure 4a). Le support 101 est alors monté à l'intérieur de l'enceinte 100, jusqu'à ce que la quantité de substance 20 entre juste en contact avec la membrane 30. La hauteur du support 101 est alors fixée. L'intérieur de l'enceinte 100 est ensuite mis progressivement en dépression, par aspiration de l'air présent dans l'enceinte à travers un orifice 103 prévu à cet effet. Sous l'effet de la dépression, la membrane 30 fléchit vers l'intérieur de l'enceinte 100, entraînant un déplacement radial progressif de la quantité de substance 20 qui est située sur les cellules 10. La substance 20 est poussée parallèlement à la surface S1 selon un front de déplacement sensiblement circulaire de plus en plus grand, au fur et à mesure que la membrane 30 est appliquée sur l'ensemble des cellules (figure 4b). Chaque cellule 10 est remplie lorsque le front de déplacement de la substance 20 passe sur cette cellule. Lorsque la dépression est suffisamment augmentée, la membrane 30 est appliquée sur tout l'ensemble de cellules remplies et l'excédent de substance est éliminé par débordement à la périphérie du composant 1.

La substance 20 est poussée au dessus des parois 11 qui séparent les cellules 10 avec une pression adaptée pour que de la substance momentanément présente sur les sommets des parois 11 soit ensuite repoussée. De cette façon, toutes les cellules 10 sont précisément remplies de substance jusqu'à un même niveau, qui est fixé par la hauteur des parois 11, et les sommets des parois 11 sont découverts.

Un film de fermeture des cellules 10 peut ensuite être appliqué sur le composant 1, par-dessus les cellules remplies. Un tel film est transparent. Il peut comporter une surface qui est destinée à entrer en contact avec les parois 11, au niveau des sommets de celles-ci, et qui est constituée d'un matériau adhésif, d'un matériau hot-melt ou d'un polymère permettant de fixer le film sur les parois. Eventuellement, cette surface du film de fermeture peut être activée thermiquement ou par irradiation pour adhérer aux parois 11. En outre, le film peut être chauffé après avoir été appliqué sur l'ensemble de cellules 10, afin de fixer le film aux sommets des parois 11 par collage, fusion ou polymérisation. Une fermeture étanche, ou scellement, des cellules 10 remplies est ainsi obtenue.

D'une façon particulièrement avantageuse, le film de fermeture des cellules est appliqué sur l'ensemble de cellules en même temps que les cellules sont remplies de substance. Pour cela, le film peut être disposé entre le composant 1 et l'outil qui est utilisé pour pousser la quantité de substance à propriété optique au dessus des cellules 10. Alternativement, le film peut être directement utilisé pour pousser la quantité de substance 20 au dessus des cellules 10.

Dans le mode opératoire des figures 4a et 4b, le film de fermeture des cellules 10 peut être utilisé en tant que membrane déformable 30. Le film de fermeture est alors appliqué sur l'ensemble de cellules 10 à partir de la zone centrale de l'ensemble de cellules, en direction du bord périphérique de cet ensemble selon un front d'application sensiblement circulaire qui suit le front de déplacement de la quantité de substance 20 présente au dessus des cellules. Le film 30 est ainsi appliqué sur les sommets des parois 11 sans exercer de contrainte de cisaillement sur celles-ci. Les parois 11 ne sont donc pas déformées. En outre, la quantité de substance à propriété optique 20 est poussée au dessus des cellules par le film 30 lui-même, de sorte que la surface inférieure du film 30 est mouillée par la substance avant que cette surface obture chaque ouverture de cellule 10. De cette façon, aucune bulle d'air n'est enfermée entre le composant 1 et le film de fermeture 30. Lorsque la dépression dans l'enceinte 100 est arrêtée et que l'anneau 102 est démonté, le composant 1 est retiré avec le film 30 qui est appliqué sur les sommets des parois 11, et qui assure la fermeture des cellules 10.

Eventuellement, le composant 1 et/ou le film 30 peut être chauffé à une température adaptée pour fixer par collage, fusion ou polymérisation, le film 30 sur les sommets des parois 11. La fermeture des cellules 10 est alors définitive. En particulier, le film 30 peut être fixé aux parois des cellules 11 au moment de l'application du film sur l'ensemble de cellules. Dans ce cas, le chauffage peut être effectué, par exemple, en dirigeant un rayonnement infrarouge sur le film 30, au moyen d'une source qui est placée au dessus de l'enceinte 100.

Il est entendu que de nombreuses modifications ou adaptations peuvent être introduites par rapport aux procédés qui ont été décrits en détail ci-dessus, tout en conservant certains au moins des avantages de l'invention. Par exemple, le film de fermeture des cellules peut être préformé avant d'être appliqué sur le composant optique, afin de réduire des contraintes qui peuvent être exercées sur les parois de séparation des cellules lors de l'application. Un tel préformage peut être réalisé en maintenant le film par un bord de celui-ci, et en appliquant une différence de pression de part et d'autre du film.

Enfin, l'invention n'est pas limitée à la réalisation de lentilles optiques ou ophtalmiques, celles-ci pouvant être correctrices ou non correctrices. Elle peut être appliquée à la réalisation d'autres éléments optiques, tels que des visières de casques, des filtres, des correcteurs d'aberrations, des optiques d'éclairage, des optiques d'appareils de mesure, etc.

## Revendications

1. Procédé de réalisation d'un élément optique transparent, comprenant les étapes suivantes :
/a/ produire un composant optique (1) ayant au moins un ensemble de cellules (10) vides juxtaposées parallèlement à une surface (S1) du composant, lesdites cellules étant ouvertes au niveau de ladite surface et séparées par des parois (11) ;
/b/ déposer une quantité de substance liquide à propriété optique (20) sur une partie de l'ensemble de cellules (10), ladite quantité correspondant à un volume supérieur à la contenance totale des cellules ; et
/c/ pousser une partie de la substance (20) située à l'extérieur des cellules par dessus les parois (11) et les cellules (10), de façon à ce que de la substance pénètre dans des cellules pas encore remplies et de façon à chasser un excès de substance, en balayant tout l'ensemble de cellules.
dans lequel, à l'étape /c/, la partie de substance (20) située à l'extérieur des cellules (10) est poussée radialement depuis une zone centrale de l'ensemble de cellules en direction d'un bord périphérique dudit ensemble, selon un front de déplacement sensiblement circulaire,
le procédé étant **caractérisé en ce que** la partie de substance (20) située à l'extérieur des cellules (10) est poussée à l'étape /c/ par une membrane déformable (30) appliquée progressivement sur l'ensemble de cellules.

2. Procédé selon la revendication 1, suivant lequel la quantité de substance (20) déposée à l'étape /b/ correspond à un volume compris entre 101% et 200% de la contenance totale des cellules (10).

3. Procédé selon la revendication 1 ou 2, suivant lequel la substance à propriété optique est adaptée de sorte qu'un angle de contact de ladite substance avec le composant optique (1) est inférieur à 90°.

4. Procédé selon l'une quelconque des revendications précédentes, suivant lequel la membrane (30) est appliquée sur l'ensemble de cellules (10) en créant une dépression entre le composant optique (1) et ladite membrane.

5. Procédé selon l'une quelconque des revendications précédentes, comprenant en outre une fermeture des cellules (10) remplies de substance au moyen d'un film sensiblement transparent appliqué sur l'ensemble de cellules et fixé aux parois desdites cellules (11).

6. Procédé selon la revendication 5, suivant lequel le film de fermeture des cellules (10) est utilisé en tant que membrane déformable (30) pour pousser à l'étape /c/ la partie de substance (20) située à l'extérieur des cellules (10).

7. Procédé selon la revendication 5 ou 6, suivant lequel le film (30) est fixé aux parois (11) des cellules d'une façon permanente.

8. Procédé selon l'une quelconque des revendications 5 à 7, suivant lequel une surface du film (30) entrant en contact avec les parois des cellules (11) lors de l'application dudit film comporte un matériau adhésif, un matériau hot-melt ou un polymère permettant de fixer ledit film sur lesdites parois.

9. Procédé selon l'une quelconque des revendications 5 à 8, suivant lequel une surface du film (30) entrant en contact avec les parois des cellules (11) lors de l'application dudit film est activée thermiquement ou par irradiation pour adhérer aux dites parois.

10. Procédé selon l'une quelconque des revendications 5 à 9, suivant lequel la fermeture des cellules remplies (10) est effectuée en appliquant progressivement le film (30) sur l'ensemble de cellules pendant l'étape /c/, ledit film poussant la partie de la substance à propriété optique (20) située à l'extérieur des cellules pendant l'application.

11. Procédé selon la revendication 10, suivant lequel le film (30) est appliqué sur l'ensemble de cellules (10) à partir d'une zone centrale de l'ensemble de cellules en direction d'un bord périphérique dudit ensemble, selon un front d'application sensiblement circulaire.

12. Procédé selon la revendication 11, suivant lequel le film (30) est appliqué sur l'ensemble de cellules (10) en créant une dépression entre le composant optique (1) et ledit film.

13. Procédé selon l'une quelconque des revendications 5 à 12, suivant lequel le film (30) est préformé avant d'être appliqué sur l'ensemble de cellules (10).

14. Procédé selon la revendication 13, suivant lequel le film (30) est préformé en maintenant un bord dudit film, et en appliquant une différence de pression de part et d'autre dudit film.

15. Procédé selon l'une quelconque des revendications précédentes, suivant lequel l'élément optique comprend une lentille.

16. Procédé selon la revendication 15, suivant lequel l'élément optique comprend une lentille ophtalmique.

## Claims

1. A method of producing a transparent optical element, which comprises the following steps:
a) producing an optical component (1) having at least one set of empty cells (10) which are juxtaposed, parallel with a surface (S1) of the component, said cells being open at the level of said surface and separated by walls (11);
b) depositing a quantity of a liquid substance having an optical property (20) over a part of the set of cells (10), said quantity corresponding to a volume greater than the total capacity of the cells; and
c) pushing a portion of the substance (20) which is situated outside of the cells over the walls (11) and the cells (10), so that the substance penetrates into the cells not yet filled and so as to expel an excess of substance, by sweeping the whole set of cells,
wherein, in step c), the portion of substance (20) which is situated outside of the cells (10) is pushed radially from a central zone of the set of cells towards a peripheral edge of said set, according to a substantially circular moving front line,
the method being **characterized in that** the portion of substance (20) situated outside of the cells (10) is pushed in step /c/ by a deformable membrane (30) applied progressively over the set of cells.

2. The method as claimed in claim 1, wherein the quantity of substance (20) which is deposited in step b) corresponds to a volume of between 101% and 200% of the total capacity of the cells (10).

3. The method as claimed in claim 1 or 2, wherein the substance having an optical property is adapted so that an angle of contact between said substance and the optical component (1) is less than 90°.

4. The method as claimed in any one of the preceding claims, wherein the membrane (30) is applied over the set of cells (10) by creating a reduced pressure between the optical component (1) and said membrane.

5. The method as claimed in any one of the preceding claims, furthermore comprising a sealing of the cells (10) filled with substance by means of a substantially transparent film applied over the set of cells and fixed to the walls of said cells (11).

6. The method as claimed in claim 5, wherein the film for sealing the cells (10) is used as the deformable membrane (30) for pushing the portion of substance (20) situated outside of the cells (10) in step c).

7. The method as claimed in claim 5 or 6, wherein the film (30) is fixed to the walls (11) of the cells in a permanent manner.

8. The method as claimed in any one of claims 5 to 7, wherein a surface of the film (30) coming into contact with the walls of the cells (11) during the application of said film comprises an adhesive material, a hot-melt material or a polymer making it possible to fix said film on said walls.

9. The method as claimed in any one of claims 5 to 8, wherein a surface of the film (30) coming into contact with the walls of the cells (11) during the application of said film is activated by heat or by irradiation in order to adhere to said walls.

10. The method as claimed in any one of claims 5 to 9, wherein the sealing of the filled cells (10) is carried out by applying the film (30) progressively over the set of cells during step c), said film pushing the portion of substance having an optical property (20) situated outside of the cells during the application.

11. The method as claimed in claim 10, wherein the film (30) is applied over the set of cells (10) starting from a central zone of the set of cells, towards a peripheral edge of said set, according to a substantially circular application front line.

12. The method as claimed in claim 11, wherein the film (30) is applied onto the cells (10) by creating a reduced pressure between the optical component (1) and said film.

13. The method as claimed in any one of claims 5 to 12, wherein the film (30) is pre-formed before being applied onto the set of cells (10).

14. The method as claimed in claim 13, wherein the film (30) is pre-formed by holding an edge of said film and by applying a pressure difference on either side of said film.

15. The method as claimed in any one of the preceding claims, wherein the optical element comprises a lens.

16. The method as claimed in claim 15, wherein the optical element comprises an ophthalmic lens.

## Patentansprüche

1. Verfahren zur Herstellung eines transparenten optischen Elements, umfassend die folgenden Schritte:
a) Erstellen einer optischen Komponente (1), welche wenigstens einer Anordnung von leeren Zellen (10) aufweist, die parallel zu einer Oberfläche (S1) der Komponente aneinandergereiht sind, wobei die Zellen auf Höhe der Oberfläche offen sind und durch Wände (11) getrennt sind,
b) Auftragen einer Menge einer flüssigen Substanz mit optischen Eigenschaften (20) auf einen Teil der Anordnung von Zellen (10), wobei die Menge einem Volumen entspricht, welches größer als der Gesamtinhalt der Zellen ist, und
c) Schieben eines Teils der Substanz (20), der sich außerhalb der Zellen befindet, über die Wände (11) und die Zellen (10), so dass die Substanz in noch nicht gefüllte Zellen eindringt, und so dass ein Überschuss an Substanz verdrängt wird, wobei über die gesamte Anordnung von Zellen hinweg gefegt wird,
wobei im Schritt c) der Teil der Substanz (20), der sich außerhalb der Zellen (10) befindet, radial von einem zentralen Bereich der Anordnung von Zellen aus gemäß einer im Wesentlichen kreisförmigen Verlagerungsfront in Richtung eines Umfangsrandes der Anordnung geschoben wird,
wobei das Verfahren **dadurch gekennzeichnet ist, dass** der Teil der Substanz (20), der sich außerhalb der Zellen (10) befindet, im Schritt c) vermittels einer verformbaren Membran (30) geschoben wird, die fortschreitend auf die Anordnung von Zellen aufgebracht wird.

2. Verfahren nach Anspruch 1, wobei die Menge von Substanz (20), die im Schritt b) aufgetragen wird, einem Volumen entspricht, welches zwischen 101 % und 200 % des Gesamtinhalts der Zellen (10) entspricht.

3. Verfahren nach Anspruch 1 oder 2, wobei die Substanz mit optischen Eigenschaften derart angepasst ist, dass ein Kontakt-Winkel der Substanz mit der optischen Komponente (1) kleiner als 90° ist.

4. Verfahren nach einem der vorhergehenden Ansprüche, wobei die Membran (30) auf die Anordnung von Zellen (10) aufgebracht wird, indem ein Unterdruck zwischen der optischen Komponente (1) und der Membran erzeugt wird.

5. Verfahren nach einem der vorhergehenden Ansprüche, weiterhin umfassend ein Verschließen der Zellen (10), welche mit Substanz gefüllt sind, vermittels einer Folie, die im Wesentlichen transparent ist, und die auf die Anordnung von Zellen aufgebracht und an den Wänden der Zellen (11) befestigt wird.

6. Verfahren nach Anspruch 5, wobei die Folie zum Verschließen der Zellen (10) als verformbare Membran (30) verwendet wird, um im Schritt c) den Teil der Substanz (20) zu schieben, der sich außerhalb der Zellen (10) befindet.

7. Verfahren nach Anspruch 5 oder 6, wobei die Folie (30) an den Wänden (11) der Zellen permanent befestigt wird.

8. Verfahren nach einem der Ansprüche 5 bis 7, wobei eine Oberfläche der Folie (30), die beim Aufbringen der Folie in Kontakt mit den Wänden der Zellen (11) tritt, ein adhäsives Material, ein Schmelzkleber-Material oder ein Polymer umfasst, welches es ermöglicht, die Folie an den Wänden zu fixieren.

9. Verfahren nach einem der Ansprüche 5 bis 8, wobei eine Oberfläche der Folie (30), die beim Aufbringen der Folie in Kontakt mit den Wänden der Zellen (11) tritt, thermisch oder durch Bestrahlung aktiviert wird, um an den Wänden an zu haften.

10. Verfahren nach einem der Ansprüche 5 bis 9, wobei das Verschließen der gefüllten Zellen (10) durchgeführt wird, indem die Folie (30) während des Schritts c) fortschreitend auf die Anordnung der Zellen aufgebracht wird, wobei die Folie den Teil der Substanz mit optischen Eigenschaften (20), der sich außerhalb der Zellen befindet, während des Aufbringens schiebt.

11. Verfahren nach Anspruch 10, wobei die Folie (30) auf die Anordnung (10) von Zellen ausgehend von einem zentralen Bereich der Anordnung von Zellen gemäß einer im Wesentlichen kreisförmigen Aufbringungsfront in Richtung eines Umfangsrandes der Anordnung aufgebracht wird.

12. Verfahren nach Anspruch 11, wobei die Folie (30) auf die Anordnung (10) von Zellen aufgebracht wird, indem ein Unterdruck zwischen der optischen Komponente (1) und der Folie erzeugt wird.

13. Verfahren nach einem der Ansprüche 5 bis 12, wobei die Folie (30) vorgeformt wird, bevor sie auf die Anordnung von Zellen (10) aufgebracht wird.

14. Verfahren nach Anspruch 13, wobei die Folie (30) vorgeformt wird, indem ein Rand der Folie festgehalten wird, und indem eine Druckdifferenz zwischen beiden Seiten der Folie angelegt wird.

15. Verfahren nach einem der vorhergehenden Ansprüche, wobei das optische Element eine Linse umfasst.

16. Verfahren nach Anspruch 15, wobei das optische Element eine ophthalmische Linse umfasst.
